# EUROPÄISCHE PATENTSCHRIFT

(11) **EP 1 593 478 B1**
(45) Veröffentlichungstag und Bekanntmachung des Hinweises auf die Patenterteilung: **27.09.2006**
(21) Anmeldenummer: 04101920.9
(22) Anmeldetag: 05.05.2004
(51) Int. Cl.: B29C 61/00, G01L 9/00, B65D 77/22, B65D 51/16, B65B 61/00

(54) **Verfahren zum Abdecken und Belüften eines Funktionsbereichs und Folienanordnung zur Durchführung des Verfahrens**
Process for covering and venting a functional part and sheet arrangement for performing such process
Procédé pour recouvrir et ventiler un domaine fonctionnel et dispositif avec des feuilles pour réaliser ce procédé

(43) Veröffentlichungstag der Anmeldung: 09.11.2005
(73) Patentinhaber: Schreiner Group GmbH & Co. KG, 85764 Oberschleissheim (DE)
(72) Erfinder: Paugstadt, Ralf, Dr., 80937 München (DE); Birk, Uwe, Dr., 80995 München (DE)
(74) Vertreter: Kehl, Günther

(56) Entgegenhaltungen:
- WO-A-96/03629
- WO-A-02/098659
- DE-A- 19 653 890
- DE-C- 19 542 242
- FR-A- 2 834 928
- US-A- 4 382 247

## Beschreibung

Die Erfindung betrifft ein Verfahren zum Abdecken und Belüften eines Funktionsbereichs sowie eine Folienanordnung zum Schutz mindestens eines insbesondere vor Spritzwasser zu schützenden Funktionselements.

Funktionselemente, wie beispielsweise Schutzmembranen oder Ventile für Belüftungskanäle, Gassensoren, Drucksensoren oder dergleichen müssen insbesondere vor Spritzwasser und Schmutz geschützt und gleichzeitig belüftet werden, um ihre Funktionsfähigkeit zu erhalten.

Aus der DE 196 53 890 A1 ist ein Druckausgleichetikett bekannt, das eine mit einer Membran bedeckte Aussparung aufweist. Um die Membran vor Verunreinigungen zu schützen, ist eine Schutzfolie vorgesehen, die auf einem schneckenhausförmigen Abstandshalter angeordnet ist. Der Abstandshalter wird durch Aufdrucken einer dick auftragenden Schicht erzeugt. Das bekannte Etikett weist daher eine nicht unerhebliche Dicke auf, die insbesondere bei der Bevorratung des Etiketts, insbesondere als Rollenware, und auch beim Aufspenden des Etiketts auf einen Gegenstand problematisch ist. Beim zuletzt genannten Vorgang wird das auf einem Trägerband angeordnete Etikett über eine Umlenkkante gezogen, worauf sich das Etikett von seinem Trägerband abhebt. Dieser Vorgang ist bei besonders dicken Etiketten störungsanfällig.

Aus der WO 99/29150 ist eine Belüftungsvorrichtung für elektrische Steuergeräte bekannt. In einer Außenwand eines Gehäuses ist eine Öffnung vorgesehen, die außenseitig von einer konzentrischen Mulde umgeben ist. In der Mulde ist eine Membran angeordnet, die die Öffnung bedeckt. Von der Mulde aus erstrecken sich zwei in die Gehäusewand eingearbeitete Nuten radial nach außen, die Belüftungskanäle bilden. Durch ein Selbstklebeetikett werden die Mulde und der an die Mulde anschließende Teil der Belüftungskanäle abgedeckt, so daß die Membran insbesondere vor Spritzwasser geschützt ist. Die Herstellung der Belüftungseinrichtung ist aufwendig, da sie ein speziell vorbereitetes Gehäuse erfordert und sowohl eine Membran als auch ein Schutzetikett in zwei Verfahrensschritten (Aufspenden) befestigt werden müssen.

Ausgehend von dieser Problemstellung liegt der Erfindung die Aufgabe zugrunde, ein Verfahren zum Abdecken und Belüften eines Funktionsbereichs zu schaffen, mittels dessen es möglich ist, einen automatisierbaren und möglichst störungsfreien Ablauf des Abdeckvorgangs zu erreichen.

Diese Aufgabe ist gelöst mit einem Verfahren zum Abdecken und Belüften eines Funktionsbereichs, das folgende Schritte umfaßt: Bereitstellen von Schutzfolienteilen fortlaufend auf einer Bahn, Verspenden der Schutzfolienteile über einen zu schützenden Funktionsbereich, Vergrößern des Abstands zwischen dem Schutzfolienteil und dem Funktionsbereich zur Bildung von Belüftungskanälen. Mit dem Verfahren gemäß der Erfindung ist es möglich, in einem einzigen Verspendevorgang ein Schutzfolienteil über einem zu schützenden Funktionsbereich anzuordnen. Eine besondere Vorbereitung des Gehäuses ist in der Regel nicht erforderlich.

Nach einer vorteilhaften Ausführungsform erfolgt das Vergrößern des Abstands zwischen dem Schutzfolienteil und dem Funktionsbereich durch chemische oder physikalische Aktivierung.

Nach einer weiteren vorteilhaften Ausführungsform wird durch die chemische oder physikalische Aktivierung eine Ausdehnungsänderung des Schutzfolienteils und/oder eine Ausdehnungsänderung einer zwischen dem Schutzfolienteil und dem Funktionsbereich vorhandenen Zwischenschicht hervorgerufen.

Nach einer weiteren vorteilhaften Ausführungsform ist die Ausdehnungsänderung eine Schrumpfung der Zwischenschicht.

Nach einer weiteren vorteilhaften Ausführungsform ist die Ausdehnungsänderung eine Expansion des Schutzfolienteils.

Nach einer weiteren vorteilhaften Ausführungsform ist die Ausdehnungsänderung eine Vergrößerung der Dicke der Zwischenschicht durch Intumeszenz oder Elastizität.

Der Erfindung liegt auch die Aufgabe zugrunde, eine Folienanordnung zum Schutz mindestens eines zu belüftenden und insbesondere vor Spritzwasser und/oder Verunreinigungen zu schützenden Funktionselements zu schaffen, wobei die erwähnten Probleme bei der Lagerhaltung und beim Verspenden des Etiketts möglichst vermieden werden. Insbesondere soll sich die Folienanordnung durch eine möglichst geringe Dicke auszeichnen, ohne daß die Belüftungsfunktion des Funktionselements merklich beeinträchtigt wird.

Diese Aufgabe wird gelöst durch eine Folienanordnung, die mindestens ein Abdeckfolienstück aufweist, das durch Aktivierung in seinen Abmessungen veränderbar ist und/oder an mindestens eine durch Aktivierung in ihren Abmessungen veränderbare Schicht derart gekoppelt ist, daß durch die Aktivierung mindestens ein zu dem Funktionselement führender Belüftungsweg gebildet oder erweitert wird, wobei das Abdeckfolienstück und/oder die Schicht vorzugsweise durch chemische und/oder physikalische Beeinflussung aktivierbar sind.

Dank der erfindungsgemäßen Konstruktion kann eine Folienanordnung bereitgestellt werden, die eine Dicke aufweist, die die Dicke von sonstigen Folienetiketten nicht wesentlich übersteigt. Lagerhaltung und Verspendung sind unproblematisch, ähnlich wie bei sonst üblichen Etiketten.

Nach einer besonders vorteilhaften Ausführungsform weist die Folienanordnung mindestens ein Basisfolienstück mit mindestens einer Öffnung auf, wobei Abstandserweiterungsmittel vorgesehen sind, durch die der Abstand zwischen dem Basisfolienstück und dem Abdeckfolienstück zumindest bereichsweise vergrößerbar ist.

Durch die Funktion der Abstandserweiterungsmittel wird der Abstand im Bereich des Funktionselements vor dem Einsatz der Folienanordnung vorzugsweise dauerhaft erweitert, wodurch die für die Belüftung des Funktionselements erforderlichen Kanäle geschaffen werden.

Unter einem Folienstück ist in diesem Sinne sowohl eine einzelne Folie als auch ein Verbund aus mehreren Folien zu verstehen.

Vorzugsweise ist das Funktionselement mit Klebstoff mit dem Basisfolienstück oder dem Abdeckfolienstück verbunden.

Das Basisfolienstück ist mit dem Abdeckfolienstück vorzugsweise über isolierte Klebstoffpunkte verbunden, zwischen denen sich Belüftungskanäle ausbilden. Eine Verbindung über Schweißpunkte, Crimpungen oder Vergleichbares ist ebenfalls möglich.

Eines der beiden Folienstücke, vorzugsweise das Folienstück, das auf einer Gehäuseöffnung eines Gehäuses anzubringen ist, über der das Funktionselement angeordnet wird, ist mit Haftklebstoff beschichtet.

Das Funktionselement kann ein Filterelement oder eine luftdurchlässige und wasserabweisende Membran, ein Ventil, einen Sensor (Feuchtigkeitssensor, Gassensor) enthalten oder aus einem solchen bestehen.

Nach einer besonders vorteilhaften Ausführungsform der Erfindung umfassen die Abstandserweiterungsmittel unterschiedliche Schrumpf- und/oder Expansionseigenschaften des Basisfolienstücks und/oder des Abdeckfolienstücks. Beispielsweise kann durch Schrumpfen des Basisfolienstücks eine Ausbuchtung des Abdeckfolienstücks und damit eine Vergrößerung des Abstands zwischen den beiden Folienstücken erreicht werden, wodurch die erforderlichen Belüftungskanäle gebildet werden können.

In gleicher Weise wirkt jedoch - alternativ oder ergänzend hierzu - eine Expansion des Abdeckfolienstücks.

Nach einer besonders bevorzugten Ausgestaltung der Erfindung ist eine Folienanordnung vorgesehen, bei der die Abstandserweiterungsmittel Abstandsstücke umfassen, die zwischen dem Basisfolienstück und dem Abdeckfolienstück angeordnet sind, und die vorzugsweise in ihren Abmessungen veränderbar sind. Die genannte Veränderung der Abmessungen kann beispielsweise durch Elastizität der Abstandsstücke hervorgerufen werden, etwa dadurch, daß nach Abwickeln der Folienanordnung von einer Vorratsrolle die durch den Wicklungsdruck zusammengepreßten Abstandsstücke sich entspannen und den Abstand zwischen dem Basisfolienstück und dem Abdeckfolienstück der Folienanordnung in solchem Maße vergrößern, daß ein zur Bildung von Belüftungskanälen ausreichender Abstand zwischen den beiden Folienstücken geschaffen wird.

Nach einer besonders bevorzugten Ausgestaltung der erfindungsgemäßen Folienanordnung sind die Abstandsstücke intumeszierend. Unter Intumeszenz versteht man die Fähigkeit von Stoffen, etwa durch Zufuhr von Wärme oder Strahlung oder durch chemische Interaktion, aufzuschäumen oder aufzuquellen. Durch Auslösung des Intumeszenzvorgangs wird der Abstand zwischen dem Basisfolienstück und dem Abdeckfolienstück der Folienanordnung in solchem Maße vergrößert, daß ein zur Bildung von Belüftungskanälen ausreichender Abstand zwischen den beiden Folienstücken geschaffen wird.

Weitere vorteilhafte Ausführungsformen sind den Unteransprüchen zu entnehmen.

Die Erfindung wird im folgenden anhand von in den Zeichnungen schematisch dargestellten Ausführungsbeispielen näher erläutert. Die Zeichnungen sind nicht maßstabsgetreu. Insbesondere die Schichtdicken sind im Verhältnis zu den sonstigen Abmessungen der Folienanordnungen aus Gründen der Anschaulichkeit stark vergrößert.
Figur 1 zeigt eine Prinzipskizze einer Anlage zur Durchführung des Verfahrens gemäß der Erfindung;
Figur 2 zeigt die Folienanordnung gemäß der Erfindung im Schnitt längs der Schnittlinie II - II in Figur 3;
Figur 3 zeigt die Folienanordnung aus Figur 2 im Schnitt längs der Schnittlinie III - III aus Figur 2;
Figur 4 zeigt die Folienanordnung wie in Figur 2, jedoch nach Durchführung einer Schrumpfbehandlung;
Figur 5 zeigt eine weitere Ausführungsform einer Folienanordnung in Schnittdarstellung;
Figur 6 zeigt die Folienanordnung aus Figur 5, jedoch nach Durchführung einer Schrumpfbehandlung;
Figur 7 zeigt eine weitere Ausführungsform einer Folienanordnung in Schnittdarstellung;
Figur 8 zeigt die Folienanordnung aus Figur 7, jedoch nach erfolgter Vergrößerung des Abstands zwischen den beiden Folienstücken:
Figur 9 zeigt eine weitere Ausführungsform einer Folienanordnung, die an einem Gehäuse angeordnet ist, in Schnittdarstellung;
Figur 10 zeigt die Folienanordnung aus Figur 9, jedoch nach erfolgter Schrumpfbehandlung zur Bildung von Belüftungskanälen;
Figur 11 zeigt eine weitere Ausführungsform einer Folienanordnung, die an einem Gehäuse angeordnet ist, in Schnittdarstellung;
Figur 12 zeigt die Folienanordnung aus Figur 11, jedoch nach erfolgter Aktivierung eines Intumeszenzvorgangs zur Bildung von Belüftungskanälen.

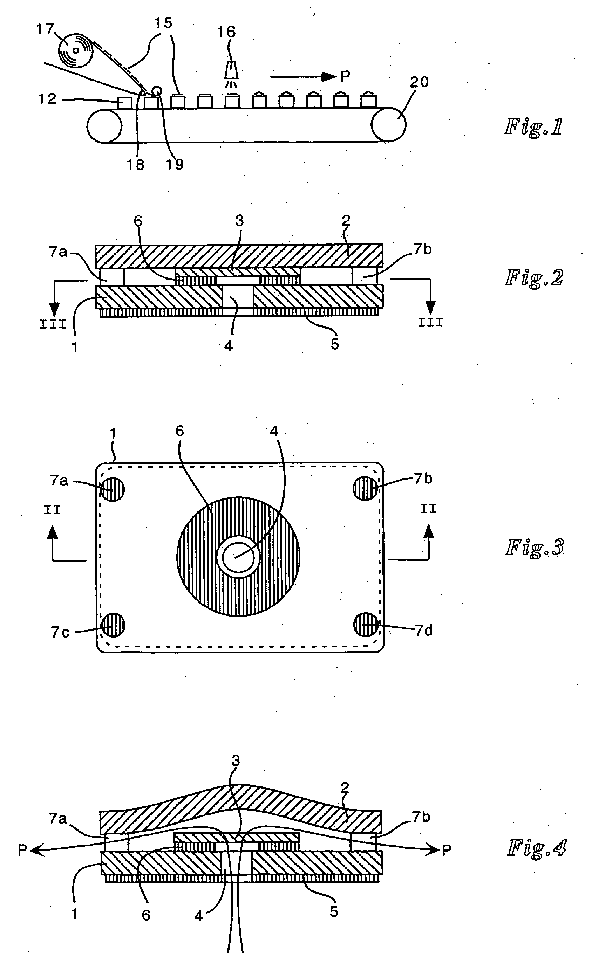

Figur 1 zeigt eine Prinzipskizze einer Anlage zur Durchführung des Verfahrens gemäß der Erfindung. In Figur 1 ist eine Förderanlage 20 zu sehen, auf der Gehäuse 12 in Richtung des Pfeils P transportiert werden. Die Gehäuse 12 weisen einen Funktionsbereich (in der Zeichnung nicht dargestellt) auf, der durch jeweils ein Schutzfolienteil 15 abgedeckt und belüftet werden soll. Zu diesem Zweck werden selbstklebende Schutzfolienteile 15 auf einer zu einer Vorratsrolle 17 aufgewickelten klebstoffabweisenden Trägerbahn bereitgestellt. Die Trägerbahn wird über eine Umlenkkante 18 gezogen, wodurch sich die selbstklebenden Schutzfolienteile 15 von der Trägerbahn abheben und mittels einer Anpreßwalze 19 auf dem jeweiligen Gehäuse 12 befestigt werden. Die so mit Schutzfolienteilen 15 versehenen Gehäuse 12 durchlaufen eine Bestrahlungseinrichtung 16. Durch die Wirkung der Bestrahlung wird der Abstand zwischen dem jeweiligen Schutzfolienteil 15 und dem jeweiligen Gehäuse 12 zur Bildung von Belüftungskanälen vergrößert.

Die in Figur 2 gezeigte Folienanordnung weist ein Basisfolienstück 1 auf, das an einer Seite (an der in Figur 2 unten liegenden Seite) mit Haftklebstoff 5 beschichtet ist. Um einen Klebstoffüberhang an den Rändern zu vermeiden, sind die Randbereiche klebstofffrei ausgeführt. Das Basisfolienstück 1 weist eine zentrale Öffnung 4 auf, die im Ausführungsbeispiel kreisrund ist. An der gegenüberliegenden Seite (an der in Figur 2 oben liegenden Seite) ist das Basisfolienstück 1 rings um die Öffnung 4 mit einem vorzugweise elastischen Klebstoff 6 beschichtet, der dazu dient, ein Funktionselement in Form einer Druckausgleichsmembran 3, die über der Öffnung 4 angeordnet ist, zu befestigen.

Alternativ kann die Druckausgleichsmembran 3 an der Außenseite des Folienstücks 1 befestigt sein, also an der Seite, an der das Folienstück 1 mit Haftklebstoff 5 beschichtet ist. Die Druckausgleichsmembran 3 liegt bei dieser Anordnungsweise zwischen dem Basisfolienstück 1 und dem Gehäuse, an dem die Folienanordnung und die Druckausgleichsmembran 3 anzuordnen sind.

Die Druckausgleichsmembran 3 weist hinsichtlich unterschiedlicher Substanzen eine selektive Permeabilität auf. Mit anderen Worten bedeutet dies, daß die Druckausgleichsmembran 3 als "molekulares Sieb" fungiert und - im Beispiel - durchlässig für Gas und weitgehend undurchlässig gegen Flüssigkeit ist.

An der Seite des Folienstücks 1, an der die Druckausgleichsmembran 3 angeordnet ist, ist an dem Folienstück 1 mittels vier Klebstoffpunkten, von denen in Figur 2 zwei Klebstoffpunkte, nämlich die Klebstoffpunkte 7a und 7b zu erkennen sind, ein Abdeckfolienstück 2 befestigt, so daß zwischen den beiden Folienstücken 1 und 2 die Druckausgleichsmembran 3 eingeschlossen ist. Das an den vier Klebstoffpunkten befestigte Folienstück 2 liegt lose auf der Druckausgleichsmembran 3 auf.

Statt der Folienstücke 1 und 2 können selbstverständlich auch Stücke aus Verbundfolien zum gleichen Zweck verwendet werden.

Das Folienstück 1 ist eine sogenannte Schrumpffolie, die sich bei Erwärmung, Bestrahlung oder - je nach dem verwendeten Material - bei einer sonstigen Behandlung dauerhaft zusammenzieht (schrumpft).

In Figur 3 ist die Folienanordnung im Schnitt längs der Schnittlinie III - III gezeigt. Es ist das Basisfolienstück 1 aus Schrumpffolie mit den auf diesem angeordneten vier Klebstoffpunkten 7a bis 7d zu erkennen. Ferner ist die zentrale Öffnung 4 mit der diese umgebenden Klebstoffschicht 6 zu sehen.

Die anhand der in den Figuren dargestellte Folienanordnung baut sehr flach, da sie - von den Klebstoffschichten abgesehen - im wesentlichen nur aus den beiden Folienstücken 1 und 2 und der Druckausgleichsmembran 3 besteht. Folienanordnungen dieser Art können daher bequem beispielsweise auf einem zu einer Vorratsrolle aufgewickelten Trägerband (nicht dargestellt), auf dem sie vorübergehend mittels der Schicht aus Haftklebstoff 5 haften, bereitgehalten werden. Dank der flachen Bauweise ist auch die automatische Verspendung möglich. Hierzu wird das Trägerband über eine Umlenkkante gezogen, so daß die über die Umlenkkante laufende Folienanordnung sich von dem Trägerband abhebt und durch Anpreßwalzen beispielsweise über einer Gehäuseöffnung eines Gehäuses (nicht dargestellt) mittels der Schicht aus Haftklebstoff 5 befestigt wird.

Nach Auslösung des Schrumpfvorgangs in dem Basisfolienstück 1 ergibt sich der in Figur 4 schematisch gezeigte Zustand. Infolge der Verkleinerung des Basisfolienstücks 1 durch den oben erwähnten Schrumpfvorgang wölbt sich das Abdeckfolienstück 2 und hebt sich von der Druckausgleichsmembran 3 ab. Infolge der Elastizität des Klebstoffs 6 erfährt die Druckausgleichsmembran 3 keine wesentliche Wölbung, da die schrumpfungsbedingte Dimensionsänderung des Basisfolienstücks 1 von dem elastischen Klebstoff 6 absorbiert wird. Durch die Auswölbung des Abdeckfolienstücks 2 werden Kanäle geschaffen, über die beispielsweise Druckausgleichsgas über die Öffnung 4, durch die Druckausgleichsmembran 3 hindurch und weiter zwischen den beiden Folienstücken 1 und 2 hindurch ins Freie strömen kann, wie durch die Pfeile P angedeutet. Selbstverständlich ist die Strömung in der Gegenrichtung (zum Ausgleich eines Unterdrucks) ebenso möglich. Die Druckausgleichsmembran ist durch das Abdeckfolienstück 2 vor Schmutz und insbesondere vor Spritzwasser geschützt.

Mit der Folienanordnung gemäß der Erfindung kann somit in einem einzigen automatisierbaren Vorgang eine Gehäuseöffnung eines Geräts mit einer insbesondere vor Spritzwasser geschützten Druckausgleichsmembran 3 versehen werden.

Nach einer Ausführungsvariante wird als Abdeckfolienstück 2 eine Dehnfolie oder Expansionsfolie eingesetzt, die sich bei entsprechender Behandlung dauerhaft vergrößert und zu der in Figur 4 gezeigten Auswölbung führt. Da sich bei dieser Ausführungsvariante hinsichtlich der bildlichen Darstellung keine Unterschiede zu den Figuren 2 bis 4 ergeben, kann von einer weiteren bildlichen Darstellung abgesehen werden.

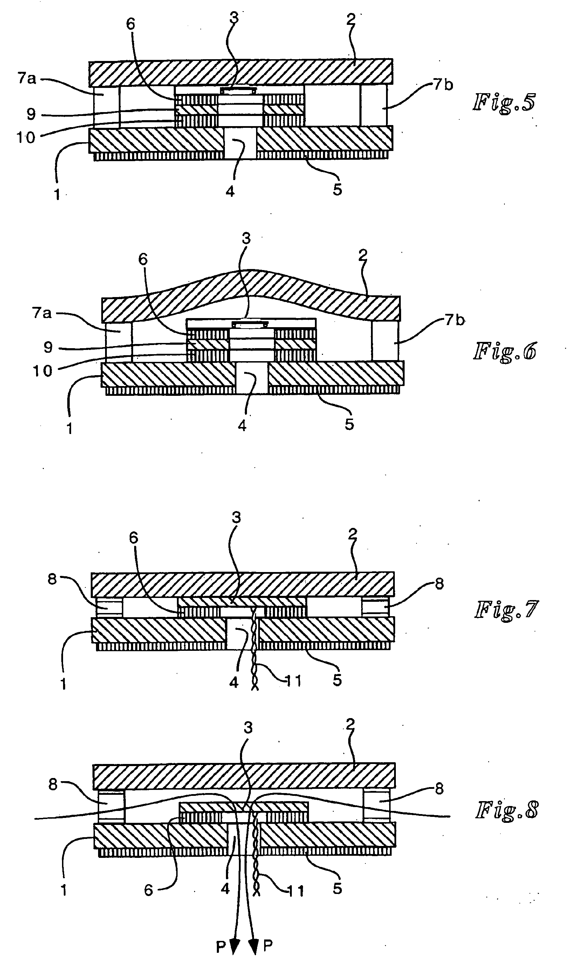

Figur 5 zeigt eine weitere Ausführungsform einer Folienanordnung in Schnittdarstellung. Die in Figur 5 gezeigte Folienanordnung weist ein Basisfolienstück 1 auf, das an einer Seite mit Haftklebstoff 5 beschichtet ist. Das Folienstück weist eine zentrale Öffnung 4 auf, die im Ausführungsbeispiel kreisrund ist. An der gegenüberliegenden Seite ist das Folienstück 1 rings um die Öffnung 4 mit einem vorzugweise elastischen Klebstoff 10 beschichtet, der dazu dient, eine dimensionsstabile ringförmige Folienschicht 9 zu befestigen. Auf letzterer ist eine Schicht aus Klebstoff 6 angeordnet, die zur Befestigung eines Funktionselements in Form eines Einwegventils 3 dient.

An der Seite des Folienstücks 1, an der das Einwegventil 3 angeordnet ist, ist an dem Folienstück 1 mittels vier Klebstoffpunkten, von denen in Figur 5 zwei Klebstoffpunkte, nämlich die Klebstoffpunkte 7a und 7b zu erkennen sind, ein Abdeckfolienstück 2 befestigt, so daß zwischen den beiden Folienstücken 1 und 2 das Einwegventil 3 eingeschlossen ist. Das an den vier Klebstoffpunkten befestigte Abdeckfolienstück 2 liegt lose auf dem Einwegventil 3 auf.

Statt der Folienstücke 1 und 2 können selbstverständlich auch Stücke aus Verbundfolien zum gleichen Zweck verwendet werden.

Das Folienstück 1 ist eine Schrumpffolie, die sich bei Erwärmung, Bestrahlung oder - je nach dem verwendeten Material - bei einer sonstigen Behandlung dauerhaft zusammenzieht.

Auch die anhand der in den Figuren 5 und 6 dargestellte Folienanordnung baut sehr flach, da sie - von den Klebstoffschichten abgesehen - im wesentlichen nur aus den beiden Folienstücken 1 und 2, der dimensionsstabilen Folienschicht 9 und dem Einwegventil 3 besteht und weist daher diesselben Vorzüge hinsichtlich Lagerhaltung und Verspendung wie die anhand der Figuren 2 bis 4 erläuterte Folienanordnung auf.

Nach Auslösung des Schrumpfvorgangs in dem Basisfolienstück 1 ergibt sich der in Figur 6 schematisch gezeigte Zustand. Infolge der Verkleinerung des Basisfolienstücks 1 durch den oben erwähnten Schrumpfungsvorgang wölbt sich das Abdeckfolienstück 2 und hebt sich von dem Einwegventil 3 ab. Infolge der Elastizität des Klebstoffs 10 und insbesondere infolge der gesteigerten Dimensionsstabilität der Folienschicht 9 erfährt das Einwegventil 3 keine wesentliche Wölbung, da die schrumpfungsbedingte Dimensionsänderung des Basisfolienstücks 1 von dem elastischen Klebstoff 10 und der dimensionsstabilen Folienschicht 9 absorbiert wird. Zusätzlich oder alternativ zu der dimensionsstabilen Folienschicht 9 kann eine dimensionsstabile Folienschicht (nicht gezeigt) oberhalb des Einwegventils 3 angeordnet sein, um diesem (zusätzliche) Formstabilität zu verleihen. Durch die Auswölbung des Abdeckfolienstück 2 werden Kanäle geschaffen, über die beispielsweise Überdruckgas über die Öffnung 4, durch das Einwegventil 3 hindurch und weiter zwischen den beiden Folienstücken 1 und 2 hindurch ins Freie strömen kann. Das Einwegventil 3 ist durch das Abdeckfolienstück 2 vor Schmutz und insbesondere vor Spritzwasser geschützt.

Figur 7 zeigt eine weitere Ausführungsform einer Folienanordnung in Schnittdarstellung. Die in Figur 7 gezeigte Folienanordnung weist ein Basisfolienstück 1 auf, das an einer Seite mit Haftklebstoff 5 beschichtet ist. Das Folienstück weist eine zentrale Öffnung 4 auf, die im Ausführungsbeispiel kreisrund ist. An der gegenüberliegenden Seite ist das Folienstück 1 rings um die Öffnung 4 mit Klebstoff 6 beschichtet, der zur Befestigung eines Funktionselements in Form eines Gassensors 3 dient. Der Gassensor 3 weist eine elektrische Leitung 11 auf, die durch die zentrale Öffnung 4 geführt ist.

An der Seite des Folienstücks 1, an der der Gassensor 3 angeordnet ist, ist an dem Folienstück 1 mittels vier elastischer, selbstklebender Polster 8, von denen in Figur 7 zwei zu erkennen sind, ein Abdeckfolienstück 2 befestigt, derart, daß zwischen den beiden Folienstücken 1 und 2 der Gassensor 3 eingeschlossen ist. Das an den vier elastischen Polstern 8 befestigte Abdeckfolienstück 2 liegt lose auf dem Gassensor 3 auf. Die selbstklebenden Polster 8 können aus mit Haftklebstoff beidseitig beschichteten Schwämmen, Gummis oder Schäumen bestehen.

Statt der Folienstücke 1 und 2 können selbstverständlich auch Stücke aus Verbundfolien zum gleichen Zweck verwendet werden.

Im Auslieferungszustand, d.h. bei Anordnung der Folienanordnung auf einer Rollenbahn ist die in den Figuren 7 und 8 dargestellte Folienanordnung sehr flach, da sie - von den Klebstoffschichten abgesehen - im wesentlichen nur aus den beiden Folienstücken 1 und 2, und dem Gassensor 3 besteht und die elastischen Polster 8 durch den internen Druck der Rolle zusammengepreßt sind. Nach dem Abrollen von der Rolle entspannen sich die Polster 8, mit der Folge, daß sich die in Figur 8 gezeigte Konstellation ergibt. Infolge der Ausdehnung der elastischen Polster 8 hebt sich das Abdeckfolienstück 2 von dem Gassensor 3 ab. Durch das Abheben des Abdeckfolienstück 2 werden Kanäle geschaffen, über die Gas zwischen den beiden Folienstücken 1 und 2 hindurch, durch den Sensor 3 und über die Öffnung 4 hindurch strömen kann, wie durch die Pfeile P angedeutet. Der Gassensor 3 ist durch das Abdeckfolienstück 2 vor Schmutz und insbesondere vor Spritzwasser geschützt. Das Ergebnis der durch den Gassensor durchgeführten Analyse wird über die Leitung 11 weitergeleitet.

Nach einer Ausführungsvariante zu dem in den Figuren 7 und 8 gezeigten Ausführungsbeispiel, werden statt der elastischen Polster 8 Schichten oder Abstandsstücke aus intumeszierenden Materialen eingesetzt. Intumeszierende Materialien sind solche, die durch eine Behandlung (chemische Interaktion, Bestrahlung oder Zufuhr von Wärme) aufschäumen oder aufquellen und somit ihre Abmessungen vergrößern. Da sich bei dieser Ausführungsvariante hinsichtlich der bildlichen Darstellung keine Unterschiede zu dem Ausführungsbeispiel der Figuren 7 und 8 ergeben, kann von einer weiteren bildlichen Darstellung abgesehen werden.

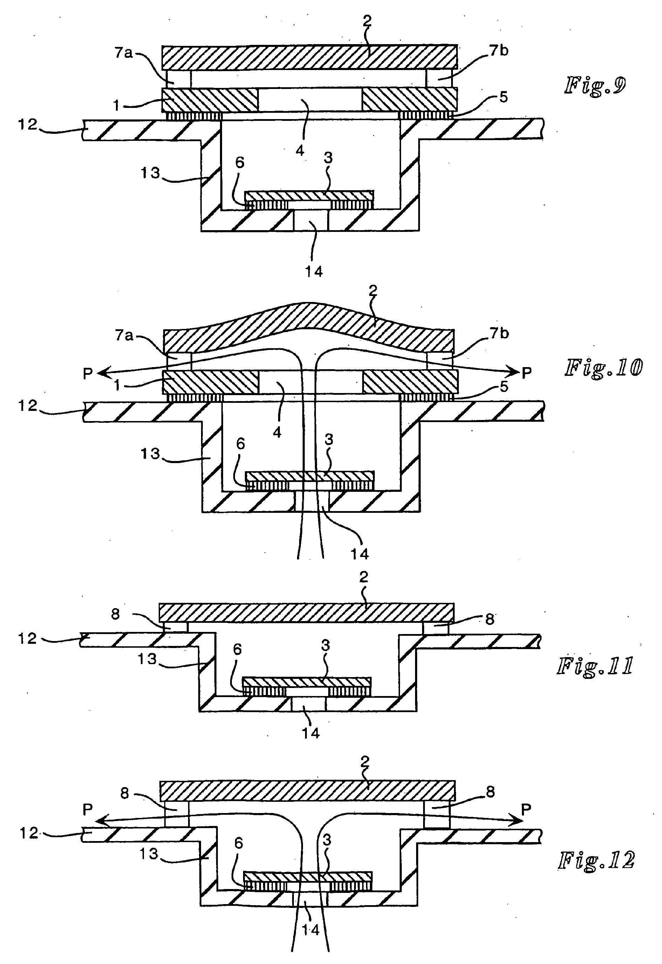

Die in Figur 9 gezeigte Folienanordnung weist ein Basisfolienstück 1 auf, das an einer Seite (an der in Figur 9 unten liegenden Seite) mit Haftklebstoff 5 beschichtet ist. Um einen Klebstoffüberhang an den Rändern zu vermeiden, sind die Randbereiche klebstofffrei ausgeführt. Das Folienstück weist eine zentrale Öffnung 4 auf, die im Ausführungsbeispiel kreisrund ist.

An der in Figur 9 oben liegenden Seite des Folienstücks 1, also an der Seite die der Haftklebstoffbeschichtung 5 gegenüberliegt, ist an dem Folienstück 1 mittels vier Klebstoffpunkten, von denen in Figur 9 zwei Klebstoffpunkte, nämlich die Klebstoffpunkte 7a und 7b zu erkennen sind, ein Abdeckfolienstück 2 befestigt.

Das Folienstück 1 ist eine sogenannte Schrumpffolie, die sich bei Erwärmung, Bestrahlung oder - je nach dem verwendeten Material - bei einer sonstigen Behandlung (zum Beispiel chemische Interaktion) dauerhaft zusammenzieht (schrumpft).

Die anhand der in Figur 9 dargestellte Folienanordnung baut sehr flach, da sie - von den Klebstoffschichten abgesehen - im wesentlichen nur aus den beiden Folienstücken 1 und 2 besteht. Folienanordnungen dieser Art können daher bequem beispielsweise auf einem zu einer Vorratsrolle aufgewickelten Trägerband (nicht dargestellt), auf dem sie vorübergehend mittels der Schicht aus Haftklebstoff 5 haften, bereitgehalten werden. Dank der flachen Bauweise ist auch die automatische Verspendung möglich. Hierzu wird das Trägerband über eine Umlenkkante gezogen, so daß die über die Umlenkkante laufende Folienanordnung sich von dem Trägerband abhebt und durch Anpreßwalzen beispielsweise über einer Gehäuseöffnung eines Gehäuses mittels der Schicht aus Haftklebstoff 5 befestigt wird.

Wie Figur 9 zeigt, ist die Folienanordnung an einem Gehäuse 12 mittels der Schicht aus Haftklebstoff 5 befestigt. Das Gehäuse 12 weist eine Mulde 13 auf, in deren Mitte sich eine Gehäuseöffnung 14 befindet. Die Gehäuseöffnung 14 wird von einem Druckausgleichselement 3 überdeckt, das am Rand der Gehäuseöffnung 14 mittels einer Klebstoffschicht 6 befestigt ist. Die Folienanordnung überdeckt die Mulde 13 und befindet sich infolgedessen in einem Abstand zu dem Druckausgleichselement 3, der etwa der Tiefe der Mulde 13 entspricht.

Nach Auslösung des Schrumpfvorgangs in dem Basisfolienstück 1 ergibt sich der in Figur 10 schematisch gezeigte Zustand. Infolge der Verkleinerung des Basisfolienstücks 1 durch den oben erwähnten Schrumpfvorgang wölbt sich das Abdeckfolienstück 2. Durch die Auswölbung des Abdeckfolienstücks 2 werden Kanäle geschaffen, über die beispielsweise Druckausgleichsgas durch die Öffnung 14, durch die Druckausgleichsmembran 3 hindurch, und weiter zwischen den beiden Folienstücken 1 und 2 hindurch ins Freie strömen kann, wie durch die Pfeile P angedeutet. Selbstverständlich ist die Strömung in der Gegenrichtung (zum Ausgleich eines Unterdrucks im Gehäuse 12) ebenso möglich. Die Druckausgleichsmembran ist insbesondere durch das Abdeckfolienstück 2 vor Schmutz und insbesondere vor Spritzwasser geschützt.

Die in Figur 11 gezeigte Folienanordnung weist ein Abdeckfolienstück 2 auf, das an einer Seite (an der in Figur 11 unten liegenden Seite) mit vier selbstklebenden Abstandsstücken 8 aus intumeszierbarem Material versehen ist.

Die in Figur 11 dargestellte Folienanordnung baut sehr flach, da sie im wesentlichen nur aus dem Abdeckfolienstück 2 und den selbstklebenden Abstandsstücken 8 besteht. Folienanordnungen dieser Art können daher bequem beispielsweise auf einem zu einer Vorratsrolle aufgewickelten Trägerband (nicht dargestellt), auf dem sie vorübergehend mittels der selbstklebenden Abstandsstücke haften, bereitgehalten werden. Dank der flachen Bauweise ist auch die automatische Verspendung möglich. Hierzu wird das Trägerband über eine Umlenkkante gezogen, so daß die über die Umlenkkante laufende Folienanordnung sich von dem Trägerband abhebt und durch Anpreßwalzen beispielsweise über einer Gehäuseöffnung eines Gehäuses mittels der selbstklebenden Abstandsstücke 8 befestigt wird.

Wie Figur 11 zeigt, ist die Folienanordnung an einem Gehäuse 12 mittels der Abstandsstücke 8 befestigt. Das Gehäuse 12 weist eine Mulde 13 auf, in deren Mitte sich eine Gehäuseöffnung 14 befindet. Die Gehäuseöffnung 14 wird von einem Druckausgleichselement 3 überdeckt, das am Rand der Gehäuseöffnung 14 mittels einer Klebstoffschicht 6 befestigt ist. Die Folienanordnung überdeckt die Mulde 13 und befindet sich infolgedessen in einem Abstand zu dem Druckausgleichselement 3, der etwa der Tiefe der Mulde 13 entspricht.

Nach Aktivierung des Intumeszenzvorgangs durch Zufuhr von Wärme, Bestrahlung oder chemische Interaktion in dem Abdeckfolienstück 2 ergibt sich der in Figur 12 schematisch gezeigte Zustand. Durch die Vergrößerung der Abstandsstücke 8 infolge Intumeszenz hebt sich das Abdeckfolienstück 2 vom Rand der Mulde 13 ab. Dadurch werden Kanäle geschaffen, über die beispielsweise Druckausgleichsgas durch die Öffnung 14, durch die Druckausgleichsmembran 3 hindurch und weiter zwischen den Abstandsstücken 8 hindurch ins Freie strömen kann, wie durch die Pfeile P angedeutet. Selbstverständlich ist die Strömung in der Gegenrichtung (zum Ausgleich eines Unterdrucks im Gehäuse 12) ebenso möglich. Die Druckausgleichsmembran 3 ist durch das Abdeckfolienstück 2 vor Schmutz und insbesondere Spritzwasser geschützt.

## Patentansprüche

1. Verfahren zum Abdecken und Belüften eines Funktionsbereichs, **gekennzeichnet durch** folgende Schritte:
Bereitstellen von Schutzfolienteilen (15) fortlaufend auf einer Bahn;
Verspenden der Schutzfolienteile (15) über dem zu schützenden Funktionsbereich;
Vergrößern des Abstands zwischen dem Schutzfolienteil (15) und dem Funktionsbereich zur Bildung von Belüftungskanälen.

2. Verfahren nach Anspruch 1, bei dem das Vergrößern des Abstands zwischen dem Schutzfolienteil (15) und dem Funktionsbereich durch chemische und/oder physikalische Aktivierung erfolgt.

3. Verfahren nach Anspruch 2, bei dem durch die chemische und/oder physikalische Aktivierung eine Ausdehnungsänderung des Schutzfolienteils (15) und/oder eine Ausdehnungsänderung einer zwischen dem Schutzfolienteil (15) und dem Funktionsbereich vorhandenen Zwischenschicht (1, 8) hervorgerufen wird.

4. Verfahren nach Anspruch 3, bei dem die Ausdehnungsänderung eine Schrumpfung der Zwischenschicht (1) umfaßt.

5. Verfahren nach Anspruch 3 oder 4, bei dem die Ausdehnungsänderung eine Expansion des Schutzfolienteils (15) umfaßt.

6. Verfahren nach einem der Ansprüche 3 bis 5, bei dem die Ausdehnungsänderung eine Vergrößerung der Dicke der Zwischenschicht (8) durch Intumeszenz oder Elastizität umfaßt.

7. Folienanordnung zum Schutz mindestens eines Funktionselements, insbesondere vor Spritzwasser, welche Folienanordnung mindestens ein Abdeckfolienstück (2) aufweist, **dadurch gekennzeichnet, dass** es durch Aktivierung in seinen Abmessungen veränderbar ist und/oder an mindestens eine durch Aktivierung in ihren Abmessungen veränderbare Schicht (1, 8) derart gekoppelt ist, daß durch die Aktivierung mindestens ein zu dem Funktionselement (3) führender Belüftungsweg gebildet oder erweitert wird.

8. Folienanordnung nach Anspruch 7, bei der das Abdeckfolienstück (2) und/oder die Schicht (1, 8) durch chemische und/oder physikalische Beeinflussung aktivierbar ist.

9. Folienanordriung nach Anspruch 7 oder 8, die mindestens ein Basisfolienstück (1) mit mindestens einer Öffnung (4) aufweist, wobei Abstandserweiterungsmittel vorgesehen sind, durch die der Abstand zwischen dem Basisfolienstück (1) und dem Abdeckfolienstück (2) zumindest bereichsweise vergrößerbar ist.

10. Fölienanordnung nach Anspruch 9, bei der die durch die Abstandserweiterungsmittel verursachte Vergrößerung des Abstands zwischen dem Basisfolienstück (1) und dem Abdeckfolienstück (2) dauerhaft ist.

11. Folienanordnung nach einem der Ansprüche 7 bis 10, bei der das Funktionselement (3) mit dem Basisfolienstück (1) verbunden ist.

12. Folienanordnung nach einem der Ansprüche 7 bis 11, bei der das Basisfolienstück (1) mit dem Abdeckfolienstück (2) über isolierte Klebstoffpunkte (7a - 7d), Schweißpunkte oder Crimpungen verbunden ist.

13. Folienanordnung nach einem der Ansprüche 7 bis 12, bei der das Basisfolienstück (1) an seiner dem Abdeckfolienstück (2) abgewandten Seite mit Haftklebstoff (5) beschichtet ist.

14. Folienanordnung nach einem der Ansprüche 7 bis 13, bei der das Funktionselement (3) ein Filterelement enthält.

15. Folienanordnung nach einem der Ansprüche 7 bis 14, bei der das Filterelement luftdurchlässig und wasserabweisend ist.

16. Folienanordnung nach einem der Ansprüche 7 bis 15, bei der das Funktionselement (3) ein Ventil enthält.

17. Folienanordnung nach einem der Ansprüche 7 bis 16, bei der das Funktionselement (3) einen Sensor enthält.

18. Folienanordnung nach Anspruch 17, bei der der Sensor ein Feüchtigkeitssensor ist.

19. Folienanordnung nach Anspruch 17, bei der der Sensor ein Gassensor ist.

20. Folienanordnung nach einem der Ansprüche 9 bis 19, bei der die Abstandserweiterungsmittel unterschiedliche Schrumpf- und/oder Expansionseigenschaften des Basisfolienstücks (1) und/oder des Abdeckfolienstücks (2) umfassen.

21. Folienanordnung nach einem der Ansprüche 9 bis 20, bei der die Abstaridserweiterungsmittel eine Schrumpfbarkeit des Basisfolienstücks (1) umfassen.

22. Folienanordnung nach einem der Ansprüche 9 bis 21, bei der die Abstandserweiterungsmittel eine Expandierbarkeit des Abdeckfolienstücks (2) umfassen.

23. Folienanordnung nach einem der Ansprüche 9 bis 22, bei der die Abstandserweiterungsmittel Abstandsstücke (8) umfassen.

24. Folienanordnung nach Anspruch 23, bei der die Abstandsstücke (8) in ihren Abmessungen veränderbar sind.

25. Folienanordnung nach Anspruch 24, bei der die Abstandsstücke (8) elastisch sind.

26. Folienanordnung nach Anspruch 24, bei der die Abstandsstücke (8) intumeszierbar sind.

## Claims

1. A method for covering and ventilating a functional area, **characterized by** the following steps:
providing protective film parts (15) continuously on a web;
dispensing the protective film parts (15) over the functional area to be protected;
enlarging the distance between the protective film part (15) and the functional area to form ventilation channels.

2. The method according to claim 1, wherein the enlargement of the distance between the protective film part (15) and the functional area is performed through chemical and/or physical activation.

3. The method according to claim 2, wherein a dimension change of the protective film part (15) and/or a dimension change of an intermediate layer (1, 8) provided between the protective film part (15) and the functional area is caused by the chemical and/or physical activation.

4. The method according to claim 3, wherein the dimension change comprises a shrinkage of the intermediate layer (1).

5. The method according to claim 3 or 4, wherein the dimension change comprises an expansion of the protective film part (15).

6. The method according to one of claims 3 through 5, wherein the dimension change comprises an enlargement of the thickness of the intermediate layer (8) through intumescence or elasticity.

7. A film system for protecting at least one functional element, particularly from sprayed water, this film system having at least one cover film part (2), **characterized in that** it is changeable in its dimensions through activation and/or is coupled to at least one layer (1, 8) which is changeable in its dimensions through activation in such a way that at least one ventilation path leading to the functional element (3) is formed or expanded by the activation.

8. The film system according to claim 7, wherein the cover film part (2) and/or the layer (1, 8) is/are activatable by chemical and/or physical influence.

9. The film system according to claim 7 or 8, which has at least one-based film part (1) having at least one opening (4), distance expansion means being provided, through which the distance between the base film part (1) and the cover film part (2) may be enlarged in at least some areas.

10. The film system according to claim 9, wherein the enlargement of the distance between the base film part (1) and the cover film part (2) caused by the distance expansion means is permanent.

11. The film system according to one of claims 7 through 10, wherein the functional element (3) is connected to the base film part (1).

12. The film system according to one of claims 7 through 11, wherein the base film part (1) is connected to the cover film part (2) via isolated adhesive spots (7a - 7d), weld points, or crimps.

13. The film system according to one of claims 7 through 12, wherein the base film part (1) is coated on its side facing away from the cover film part (2) with pressure-sensitive adhesive.

14. The film system according to one of claims 7 through 13, wherein the functional element (3) contains a filter element.

15. The film system according to one of claims 7 through 14, wherein the filter element is permeable to air and water-repellent.

16. The film system according to one of claims 7 through 15, wherein the functional element (3) contains a valve.

17. The film system according to one of claims 7 through 16, wherein the functional element (3) contains a sensor.

18. The film system according to claim 17, wherein the sensor is a moisture sensor.

19. The film system according to claim 17, wherein the sensor is a gas sensor.

20. The film system according to one of claims 9 through 19, wherein the dimension expansion means comprise different shrinkage and/or expansion properties of the base film part (1) and/or the cover film part (2).

21. The film system according to one claims 9 through 20, wherein the distance expansion means comprise shrinkability of the base film part (1).

22. The film system according to one of claims 9 through 21, wherein the distance expansion means comprise expandability of the cover film part (2).

23. The film system according to one of claims 9 through 22, wherein the distance expansion means comprise spacer parts (8).

24. The film system according to claim 23, wherein the spacer parts (8) are changeable in their dimensions.

25. The film system according to claim 24, wherein the spacer parts (8) are elastic.

26. The film system according to claim 24, wherein the spacer parts (8) are capable of intumescence.

## Revendications

1. Procédé de recouvrement et d'aération d'une zone fonctionnelle, **caractérisé par** les étapes suivantes :
mise à disposition de pièces en film protecteur (15) en continu sur une bande ;
pose des pièces en film protecteur (15) sur la zone fonctionnelle à protéger ;
agrandissement de la distance entre la pièce en film protecteur (15) et la zone fonctionnelle pour former des canaux d'aération.

2. Procédé selon la revendication 1, dans lequel l'agrandissement de la distance entre la pièce en film protecteur (15) et la zone fonctionnelle a lieu par activation chimique et/ou physique.

3. Procédé selon la revendication 2, dans lequel l'activation chimique et/ou physique provoque un changement de l'extension de la pièce en film protecteur (15) et/ou un changement de l'extension d'une couche intermédiaire disposée entre la pièce en film protecteur (15) et la zone fonctionnelle (1, 8).

4. Procédé selon la revendication 3, dans lequel le changement de l'extension inclut une rétraction de la couche intermédiaire (1).

5. Procédé selon la revendication 3 ou 4, dans lequel le changement de l'extension inclut une expansion de la pièce en film protecteur (15).

6. Procédé selon une des revendications 3 à 5, dans lequel le changement de l'extension inclut une augmentation de l'épaisseur de la couche intermédiaire (8) par intumescence ou élasticité.

7. Dispositif en film pour la protection d'au moins un élément fonctionnel, notamment contre les éclaboussures d'eau, lequel dispositif en film comprend au moins un morceau de film de recouvrement (2), **caractérisé en ce que** ses dimensions sont modifiables par activation et/ou qu'il est couplé à au moins une couche (1, 8) dont les dimensions sont modifiables de manière à ce que l'activation permette de former ou d'élargir au moins une voie d'aération conduisant à l'élément fonctionnel (3).

8. Dispositif en film selon la revendication 7, dans lequel le morceau de film de recouvrement (2) et/ou la couche (1, 8) sont activables par intervention chimique et/ou physique.

9. Dispositif en film selon la revendication 7 ou 8, comprenant au moins un morceau de film de base (1) pourvu d'au moins un orifice (4) et dans lequel il est prévu des moyens d'accroissement de distance permettant d'agrandir par endroits la distance entre le morceau de film de base (1) et le morceau de film de recouvrement (2).

10. Dispositif en film selon la revendication 9, dans lequel l'agrandissement de la distance provoqué par les moyens d'accroissement de distance entre le morceau de film de base (1) et le morceau de film de recouvrement (2) est permanent.

11. Dispositif en film selon une des revendications 7 à 10, dans lequel l'élément fonctionnel (3) est relié au morceau de film de base (1).

12. Dispositif en film selon une des revendications 7 à 11, dans lequel le morceau de film de base (1) est relié au morceau de film de recouvrement (2) par des points de colle (7a-7d), des points de soudure ou des sertissures isolés.

13. Dispositif en film selon une des revendications 7 à 12, dans lequel le morceau de film de base (1) est recouvert de colle de contact (5) sur son côté détourné du morceau de film de recouvrement (2).

14. Dispositif en film selon une des revendications 7 à 13, dans lequel l'élément fonctionnel (3) inclut un élément de filtrage.

15. Dispositif en film selon une des revendications 7 à 14, dans lequel l'élément de filtrage laisse passer l'air et est hydrofuge.

16. Dispositif en film selon une des revendications 7 à 15, dans lequel l'élément fonctionnel (3) inclut une soupape.

17. Dispositif en film selon une des revendications 7 à 16, dans lequel l'élément fonctionnel (3) inclut un capteur.

18. Dispositif en film selon la revendication 17, dans lequel le capteur est un capteur d'humidité.

19. Dispositif en film selon la revendication 17, dans lequel le capteur est un capteur de gaz.

20. Dispositif en film selon une des revendications 9 à 19, dans lequel les moyens d'accroissement de distance présentent différentes propriétés de rétraction et/ou d'expansion du morceau de film de base (1) et/ou du morceau de film de recouvrement (2).

21. Dispositif en film selon une des revendications 9 à 20, dans lequel les moyens d'accroissement de distance présentent une rétractilité du morceau de film de base (1).

22. Dispositif en film selon une des revendications 9 à 21, dans lequel les moyens d'accroissement de distance présentent une expansibilité du morceau de film de recouvrement (2).

23. Dispositif en film selon une des revendications 9 à 22, dans lequel les moyens d'accroissement de distance présentent des entretoises (8).

24. Dispositif en film selon la revendication 23, dans lequel les dimensions des entretoises (8) sont modifiables.

25. Dispositif en film selon la revendication 24, dans lequel les entretoises (8) sont élastiques.

26. Dispositif en film selon la revendication 24, dans lequel les entretoises (8) sont aptes à l'intumescence.
